# FASCICULE DE BREVET EUROPEEN

(11) **EP 3 094 549 B1**
(45) Date de publication et mention de la délivrance du brevet: **08.01.2020**
(21) Numéro de dépôt: 15700575.2
(22) Date de dépôt: 15.01.2015
(51) Int. Cl.: B63B 1/12, B63B 1/32, B63B 1/10

(54) **NAVIRE MULTICOQUE À PROPULSION MARINE**
MEHRRUMPFSCHIFF MIT SCHIFFSANTRIEB
MARINE PROPULSION MULTIHULL SHIP

(30) Priorité: 16.01.2014 FR 1450335
(43) Date de publication de la demande: 23.11.2016
(73) Titulaire: Advanced Aerodynamic Vessels, 44321 Nantes Cedex 3 (FR)
(72) Inventeur: HUETZ, Lionel, F-17000 La Rochelle (FR); GUELFI, Gianluca, F-17000 La Rochelle (FR); KERHUEL, Matthieu, F-1700 La Rochelle (FR); THOMAS, Hubert, F-13100 Le Tholonet (FR)
(74) Mandataire: Gabriel, Franck
(86) Numéro de dépôt international: PCT/EP2015/050715
(87) Numéro de publication internationale: WO 2015/107125

(56) Documents cités:
- DE-A1- 19 624 159
- GB-A- 2 472 797
- US-A- 2 666 406
- US-A- 3 529 566
- US-A- 3 965 836
- US-A- 4 095 549
- US-A- 4 926 773
- US-A- 5 269 249
- US-B1- 6 311 635

## Description

L'invention a pour domaine celui des navires multicoques à propulsion marine à sustentation aérodynamique partielle passive.

L'invention concerne plus particulièrement les navires destinés au transport de personnes et/ou de matériel à des vitesses de croisière comprises entre 40 et 70 nœuds.

Plus précisément, l'invention se rapporte à un navire multicoque à propulsion marine, présentant un rapport d'une longueur du navire sur une largeur du navire inférieur à deux, et auquel est associé un repère orthogonal XYZ, dont un axe longitudinal Z, orienté de l'arrière vers l'avant du navire, correspond à un axe de roulis du navire, un axe transversal Y correspond à un axe de tangage du navire et un axe X correspond à un axe de lacet du navire, le navire comportant une superstructure et au moins deux coques, la superstructure du navire formant une aile propre à générer de manière passive une portance aérodynamique significative, c'est-à-dire comprise entre 20 et 90 %, de préférence entre 35% et 90 %, du poids total du navire à une vitesse de croisière du navire, ladite aile comportant des extrémités recourbées et connectées à chacune des coques et ayant une surface développée de l'extrados sensiblement égale au produit de la longueur du navire par la largeur du navire.

Par sustentation aérodynamique partielle passive, on entend la capacité de la superstructure du navire à générer une portance aérodynamique par simple différence entre la vitesse du navire et la vitesse de l'air, et ceci par opposition à un aéroglisseur par exemple, qui génère une surpression sous le navire par le biais de compresseurs.

Par sustentation aérodynamique partielle passive, on entend également que la portance aérodynamique générée par la superstructure est comprise entre 20 et 90 % du poids total du navire à une vitesse de croisière du navire. Cela sous-entend que la superstructure possède une surface développée extérieure sensiblement égale au produit de la longueur du navire par la largeur du navire, sachant que le rapport longueur / largeur du navire est inférieur à deux.

Le document GB 2472797 décrit un navire du type précité.

Le document US 5269249 A décrit un bateau multicoque à sustentation aérodynamique influençable par un aileron, le centre de gravité de gravité étant situé au tiers avant de la longueur.

De manière générale, dans le domaine de l'architecture navale, il est convenu, comme cela est par exemple illustré par le document US 2 666 406 A1, de placer le point A, d'application de la portance aérodynamique en avant du centre de gravité G, selon l'axe longitudinal Z, le point H d'application de la résultante des efforts hydrodynamiques étant par conséquent nécessairement en arrière du point G. Cette configuration est également celle du navire selon le document GB 2 472 797.

Selon Maurizio Collu, dans l'article «The longitudinal static stability of an aerodynamically alleviated marine vehicle, a mathematical model», Proc. R. Soc. A 2010, page 466, l'analyse classique de la stabilité d'un navire impose de placer le point A en avant du point G, notamment parce que les coques présentent un appui hydrodynamique H situé en arrière du point G et qui se déplace vers l'arrière lorsque le navire déjauge sous l'effet de la vitesse et de la portance aérodynamique.

Les inventeurs du navire objet de la présente demande de brevet ont identifié dans cette configuration un problème de sécurité fondamental. En effet, cette analyse classique est fondée sur un modèle linéaire valable pour les angles de tangage faibles, autour de la position d'équilibre du navire. Cependant, pour des angles de tangage plus importants, les hypothèses du modèle linéaire utilisé ne sont plus vérifiées.

De manière simple, lorsque, sous l'effet d'une perturbation extérieure relativement importante telle qu'une saute de vent ou une vague, le navire se cabre, quittant sa position d'équilibre, l'incidence de l'aile augmente. Ceci a pour conséquence une augmentation de la portance aérodynamique de l'aile. Le navire se cabre alors encore davantage, entrant dans une dynamique instable, pouvant aboutir à un retournement vers l'arrière du navire.

De manière similaire, lorsque la perturbation extérieure fait que le navire plonge, l'incidence de l'aile diminue, et par conséquent la portance diminue. Le navire plonge encore plus, entrant dans une dynamique instable, pouvant conduire à l'enfournement et à la perte du navire.

L'invention a donc pour but de pallier les problèmes ci-dessus.

L'invention a pour objet un navire multicoque à propulsion marine, destiné au transport de personnes et/ou de matériel conformément aux revendications annexées..

Le présent navire est intrinsèquement stable, sûr et performant en termes de vitesse et de consommation grâce aux concepts aérodynamiques et hydrodynamiques mis en œuvre autour d'un positionnement relatif des points A, G, H innovant. La stabilité accrue permet de faire naviguer le navire plus vite et de bénéficier ainsi d'une portance aérodynamique supérieure qui, par voie de conséquence, diminue la résistance à l'avancement et donc la consommation d'énergie requise pour propulser le navire.

L'invention sera mieux comprise à la lecture de la description qui va suivre de modes de réalisation particuliers, donnés uniquement à titre illustratif et non limitatif, la description étant faite en se référant aux dessins annexés sur lesquels :
- la figure 1 est une vue en perspective, en plongée, d'un catamaran, constituant un premier mode de réalisation du navire selon l'invention ;
- la figure 2 est une vue en perspective, en contre-plongée, du catamaran de la figure 1 ;
- les figures 3 à 5 constituent un plan de forme du catamaran de la figure 1, la figure 3 correspondant à une vue de côté, la figure 4, à une demi-vue de face et à une demi-vue de derrière, et la figure 5, à une demi-vue de dessus ;
- la figure 6 est une représentation schématique du catamaran de la figure 1 en vue de côté, illustrant la position des points d'application des forces ;
- la figure 7 est une vue de dessous du catamaran de la figure 1 ;
- la figure 8 est un profil en forme d'aile de la superstructure du catamaran de la figure 1 ;
- la figure 9 est une section dans un plan transversal XY du catamaran de la figure 1 ;
- la figure 10 est une vue en perspective, en plongée, d'un trimaran, constituant un second mode de réalisation du navire selon l'invention ;
- la figure 11 est une vue en perspective, en contre-plongée, du trimaran de la figure 10 ;
- la figure 12 est une coupe selon un plan médian XZ d'un tripode, constituant un troisième mode de réalisation du navire selon l'invention ; et,
- la figure 13 est une vue de face du tripode de la figure 12.

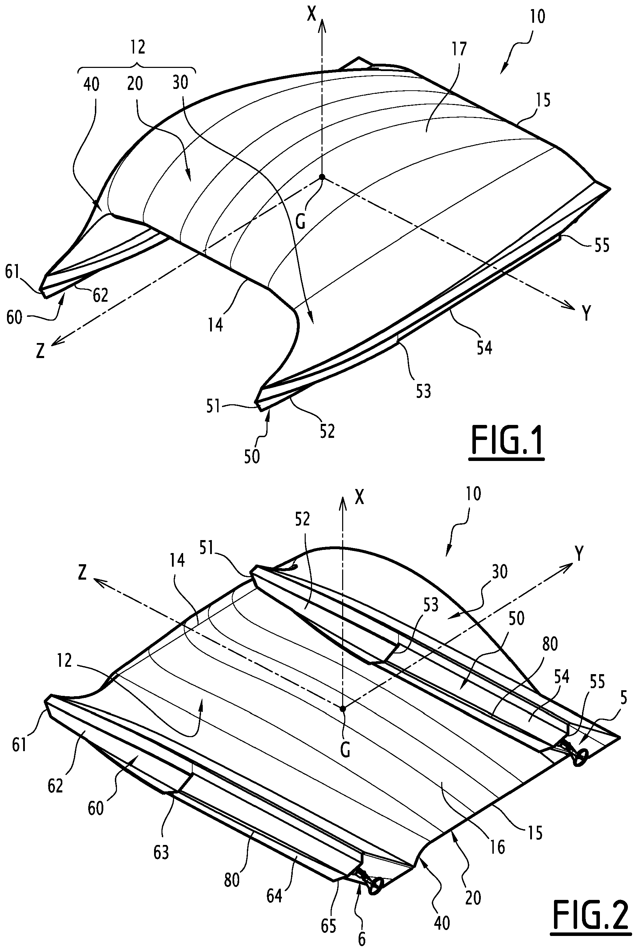

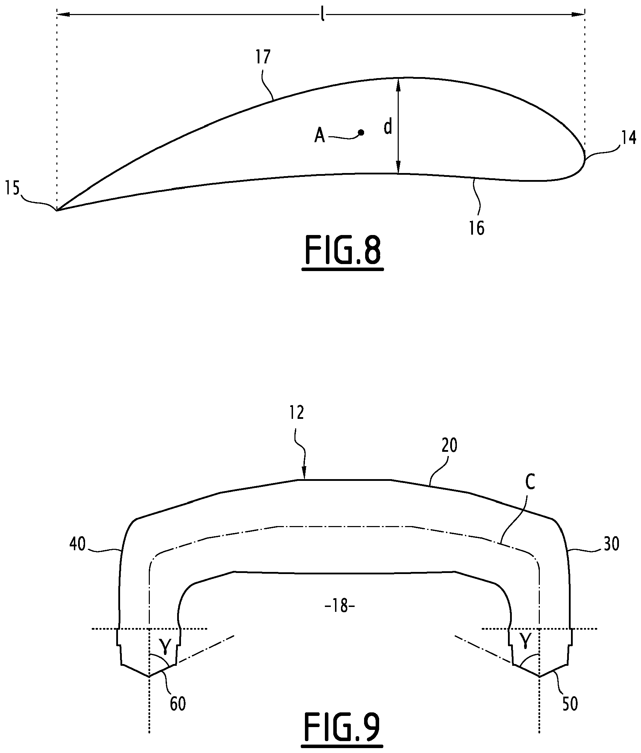

En se référant aux figures 1 et 9, un mode de réalisation particulier du navire selon l'invention va être présenté.

Selon ce mode de réalisation, le navire 10 est un catamaran.

Il est destiné au transport de personnes et/ou de matériel, à des vitesses de croisière entre 40 et 70 nœuds, par exemple 60 noeuds.

Au navire 10 est associé un repère XYZ, dont l'axe longitudinal Z, orienté de l'arrière vers l'avant du navire correspond à l'axe de roulis du navire ; dont l'axe transversal Y, orienté de droite à gauche (les termes « droite » et « gauche » utilisés ici correspondant aux termes marins « tribord » et « bâbord ») correspond à l'axe de tangage du navire ; et dont l'axe X orthogonal aux axes Y et Z, et orienté de bas en haut, correspond à l'axe de lacet du navire. Au repos, le plan YZ est horizontal et l'axe X vertical. Le repère XYZ est attaché au centre de gravité G du navire 10.

Le navire 10 est symétrique par rapport au plan médian XZ.

Il présente un rapport longueur/largeur inférieur à 2, par exemple de 1,4.

Sa longueur selon l'axe Z est entre 10 et 50 mètres, de préférence entre 18 et 30 mètres, par exemple de 21 mètres. Sa largeur est par exemple de 17 mètres.

Le navire 10 comporte une superstructure 12 et deux coques, respectivement droite 60 et gauche 50.

La superstructure 12 a pour fonction de générer de manière passive une portance aérodynamique selon l'axe X, dès que le navire 10 a une vitesse relative positive par rapport à l'air.

Pour ce faire, la superstructure 12 présente la forme d'une aile dont une section est représentée sur la figure 8.

La superstructure 12 présente ainsi un bord d'attaque 14 à l'avant, un bord de fuite 15 à l'arrière, un intrados 16 s'étendant du bord d'attaque 14 au bord de fuite 15 et constituant une surface de dessous de la superstructure 12, et un extrados 17 s'étendant du bord d'attaque 14 au bord de fuite 15 et constituant une surface de dessus de la superstructure 12.

La longueur totale l et l'épaisseur d de l'aile sont dans un rapport d'environ 5. Par exemple, l'aile fait environ 20 mètres de long et 4 mètres d'épaisseur.

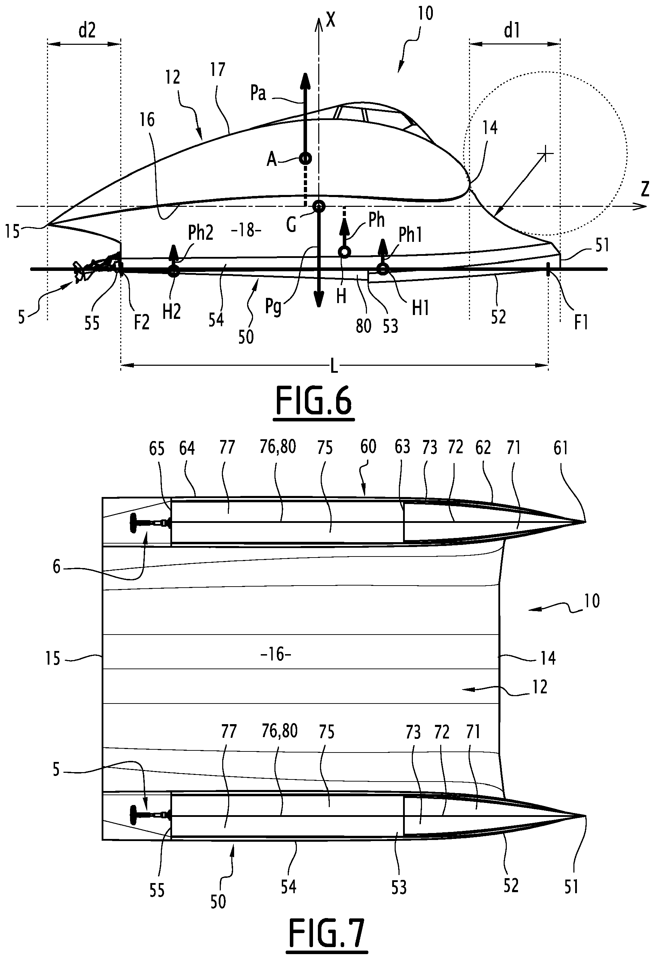

La superstructure 12 résulte du balayage («sweep » en anglais) du profil représenté sur la figure 8, le long d'un contour C, représenté sur la section transversale de la figure 7. Le contour C a la forme d'un « U ».

Ainsi, la superstructure comporte une portion centrale 20 et des portions d'extrémité, respectivement 30 et 40, recourbées vers le bas par rapport à la portion centrale 20.

La portion d'extrémité droite 40 constitue un élément de raccordement de la superstructure 12 à la coque droite 60, tandis que la portion d'extrémité gauche 30 constitue un élément de raccordement de la superstructure 12 à la coque gauche 50.

Il y a donc continuité aérodynamique entre la portion centrale 20, d'une part, et les portions d'extrémité 30 et 40, d'autre part, de la superstructure 12. Les portions d'extrémité 30 et 40 contribuent à environ 20 % de la portance aérodynamique totale de la superstructure 12 à la vitesse de croisière.

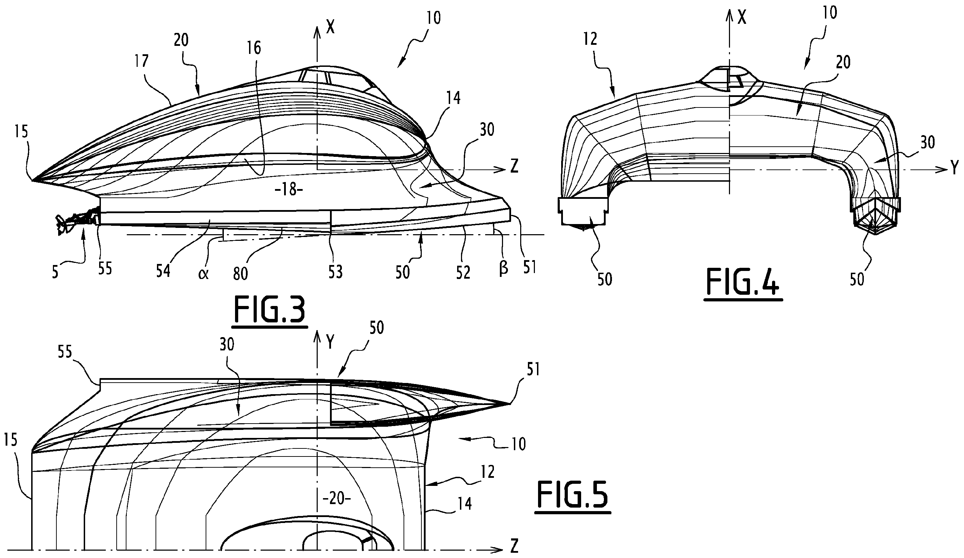

Comme visible sur les figures 3 et 4, l'intrados 16 de la superstructure 12 forme, avec la surface de l'eau, un tunnel 18.

Ainsi, la superstructure 12 du navire 10, qui est une aile dont les extrémités sont recourbées pour venir affleurer la surface de l'eau, génère une portance aérodynamique bien supérieure à celle d'une aile plane, disposée sensiblement parallèlement à la surface de l'eau et ouverte à chacune de ses extrémités.

Le bord d'attaque 14 est, au niveau de la portion centrale 20, à environ 5 mètres au-dessus de la surface de l'eau, tandis que le bord de fuite 15 est, au niveau de la portion centrale 20, à environ 3 mètres au-dessus de la surface de l'eau.

La superstructure 12 est propre à générer une portance aérodynamique totale Pa, qui s'applique en un point A. Le point A est sensiblement fixe quelle que soit la vitesse du navire 10. Le point A est situé longitudinalement par rapport au bord d'attaque 14 sensiblement à un tiers de la longueur totale l du profil de l'aile.

Le poids Pg de l'ensemble du navire 10 s'applique au centre de gravité G.

Enfin, les portions immergées des coques 50 et 60 génèrent des efforts hydrodynamiques dont la résultante Ph s'applique en un point H.

Comme illustré à la figure 6, le navire 10 est conçu de sorte que le point A est situé, en projection selon l'axe longitudinal Z, en arrière du centre de gravité G.

Pour des raisons d'équilibre du navire 10, la réponse hydrodynamique s'applique en un point H qui doit être situé, en projection le long de l'axe longitudinal Z, sous ou en avant du point G.

Le fait que, dans le navire, les points A, G et H soient successivement disposés de l'arrière vers l'avant, selon l'axe Z, se traduit par un décalage vers l'arrière de la partie émergée par rapport à la partie immergée du navire 10. Plus précisément, le navire 10 est conçu de sorte que l'extrémité avant F1 du plan de flottaison soit située en avant du bord d'attaque 14 de la superstructure 12. La longueur de flottaison L est la distance mesurée, selon l'axe Z, entre les extrémités avant F1 et arrière F2 du plan de flottaison. Le centre de gravité G du navire est placé à au moins 52 % de la longueur de flottaison L, en arrière de l'extrémité avant F1 du plan de flottaison. En conséquence, comme cela est représenté sur la figure 6, le bord d'attaque 14 de la superstructure 12 est nettement en retrait des étraves des coques 50, 60, à une première distance d1 de celles-ci ; et le bord de fuite 15 est placé en retrait des tableaux arrière des coques 50, 60, à une seconde distance d2 de ceux-ci.

Avantageusement, au niveau de chacune de ces portions d'extrémité, le bord d'attaque 14 est conformé de manière à venir raccorder le bord d'attaque de la portion principale 20 de la superstructure et une étrave de chaque coque de manière aérodynamique.

Plus précisément, comme cela est représenté schématiquement sur la figure 6, en projection dans le plan médian XZ, le bord d'attaque 14 présente, au niveau de chaque portion d'extrémité 30, 40, un profil courbe, permettant un raccordement à l'étrave correspondante progressif et très arrondi, de nature à limiter le décrochage de l'écoulement d'air par vent latéral.

Avantageusement, la ligne de fuite 15, au niveau de chaque portion d'extrémité 30, 40 de la superstructure, permet de raccorder le bord de fuite d'un tableau arrière de chaque coque, de manière progressive, afin de maximiser la portance de la superstructure.

Cette forme particulière des portions d'extrémité 30, 40 de la superstructure permet de générer un rapport portance aérodynamique sur trainée (« lift/drag » en anglais) très élevé, supérieur à 20, même par vent relatif latéral.

Les coques droite 50 et gauche 60 vont maintenant être décrites en détail.

La coque 50, respectivement 60, est du type coque planante à «step ».

La coque 50 comporte successivement selon l'axe Z, une étrave 51, un corps avant 52, un redan 53, disposé sensiblement dans un plan parallèle au plan XY, un corps arrière 54 et un tableau arrière 55.

La portion d'extrémité arrière du corps arrière 54 est propre à recevoir un système propulsif 5, dont l'arbre d'hélice traverse à angle le tableau arrière 55, de manière à ce que la ou les hélices soient au moins semi-immergées à la vitesse de croisière.

De manière similaire, la coque gauche 60 comporte une étrave 61, un corps avant 62, un redan 63, un corps arrière 64 et un tableau arrière 65.

La portion arrière du corps arrière 64 reçoit un système propulsif 6, dont l'arbre d'hélice traverse à angle le tableau arrière 65, de manière à ce que les hélices soient semi-immergées à la vitesse de croisière.

La coque 50, respectivement 60, est constituée d'un corps avant 52, 62, et d'un corps arrière 54, 64, séparés l'un de l'autre par un redan 53, 63, formant un décrochement, en projection dans un plan XZ, entre les lignes de quille 72 et 76 respectivement des corps avant 52, 62, et arrière 54, 64.

Les lignes de quille 72 et 76 sont dans le prolongement l'une de l'autre en projection dans un plan YZ (cf. figure 7).

Dans le plan XZ, comme représenté sur la figure 3, au niveau du redan 53, respectivement 63, l'angle α entre les lignes de quille 72 et 76 est entre 0 et 6°, notamment égal à 4°.

Dans le plan XZ, la ligne de quille 76 du corps arrière 54, 64, est sensiblement rectiligne. La ligne de quille 72 du corps avant 52, 62, est faiblement cambrée, de manière à ce que l'étrave 51, 61 du corps avant 52, 62 sorte de l'eau.

Dans le plan XZ, les lignes de quille 72 et 76 forment avec l'horizontale un angle d'incidence β, compris entre - 5 et 5° en fonction de la vitesse du navire 10 et, par conséquent de son assiette.

Les corps avant 52, respectivement 62, et arrière 54, respectivement 64, constituent respectivement des coques planantes.

Le corps avant 52, respectivement 62, présente ainsi deux faces, respectivement intérieure 71 et extérieure 73, s'étendant latéralement à partir de la ligne de quille 72, de sorte que la section transversale du corps avant présente une forme en « V ».

Le corps arrière 54, respectivement 64, présente ainsi deux faces, respectivement intérieure 75 et extérieure 77, s'étendant latéralement à partir de la ligne de quille 76, de sorte que la section transversale du corps arrière présente une forme en « V ».

Comme représenté sur la figure 9, le demi-angle γ d'ouverture de la section en « V » du corps arrière est sensiblement constant, et vaut environ 75 °.

En revanche, le demi-angle γ d'ouverture de la section en « V » du corps avant diminue lorsque l'on se déplace longitudinalement, du redan 53, 63 vers l'étrave 51, 61. Par exemple, ce demi-angle vaut environ 75° au voisinage du redan et est sensiblement nul au voisinage de l'étrave. De manière plus spécifique, le corps avant se caractérise par un coefficient prismatique mesuré en assiette hydrostatique inférieur à 0,7.

Le corps avant 52, respectivement 62, présente ainsi une forme spatulée. En cas de modification trop importante de l'assiette du navire 10 en piqué, la section du corps avant qui entre dans l'eau fournit une force hydrodynamique importante, propre à rétablir l'assiette du navire. Les risques d'enfournement sont ainsi réduits.

La géométrie des coques 50 et 60 est telle que la résultante des efforts hydrodynamiques Ph au point H est partagée entre une contribution avant Ph1, générée par une portion immergée du corps avant de chaque coque et qui s'applique au point H1, et une contribution arrière Ph2, générée par une portion immergée du corps arrière de chaque coque et qui s'applique au point H2. Ainsi, les coques définissent des points d'appui avant et des points d'appui arrière pour le navire 10.

Le comportement du navire 10 selon l'exemple de réalisation décrit est le suivant.

A l'arrêt, lorsque la portance aérodynamique Pa est nulle, le point H est à l'aplomb du point G : ces deux points se confondent en projection selon l'axe Z. Les points d'appui avant et arrière assurent une stabilité du navire 10.

Pour les vitesses faibles, c'est-à-dire inférieures à 20 nœuds, le navire 10 se comporte comme un navire à carène à semi-déplacement. Il présente une résistance à l'avancement limitée grâce à un rapport surface de flottaison/déplacement relativement faible.

Aux vitesses moyennes, entre 20 nœuds et une vitesse critique Vc, qui représente un maximum de résistance à l'avancement et qui est entre 30 nœuds et 40 nœuds, le corps avant génère dans son sillage une dépression de la surface de l'eau. Le corps arrière de la coque étant alors moins soutenu par des efforts hydrodynamiques, le navire bascule vers l'arrière. Cependant, en mouvement, la portance aérodynamique Pa qui s'applique au point A, en arrière du point G, génère un moment autour de l'axe transversal Y qui a tendance à modifier l'assiette du navire 10, de telle sorte que les tableaux arrière 55 et 65 des coques remontent.

Ainsi, le basculement vers l'arrière causé par une perte d'appui hydrodynamique à l'arrière du navire est limité par la portance aérodynamique générée par la superstructure, qui est propre à compenser la diminution des efforts hydrodynamiques sur l'arrière du navire.

Les efforts hydrodynamiques s'appliquant au point H2 diminuant avec la vitesse, le point H se déplace progressivement vers l'avant, vers le point H1. Ce déplacement vers l'avant du point H, permet de contrebalancer l'augmentation du moment de la portance. Le déplacement vers l'avant du point H est permis grâce à la forme particulière des coques.

Aux vitesses élevées, c'est-à-dire supérieures à la vitesse critique Vc, en particulier à la vitesse de croisière, le navire 10 est tel que la surface mouillée présente un angle d'incidence, correspondant à l'angle β défini ci-dessus, optimisé permettant un rapport portance/résistance à l'avancement maximum.

A ces vitesses, la portance aérodynamique Pa générée par la superstructure 12 est significative devant le poids Pg total du navire 10. Par l'effet de portance aérodynamique de la superstructure 12, le navire 10 déjauge, de sorte que le poids perçu par les coques (principalement le corps avant de chaque coque) est fortement réduit. En conséquence, la résistance à l'avancement du navire est extrêmement réduite.

De plus, cela entraîne non seulement un amortissement des mouvements oscillants de rotation autour de l'axe Y, mais surtout une forte diminution des mouvements de pilonnement le long de l'axe X.

Si la portance aérodynamique augmente brusquement à cause d'une perturbation extérieure due à une saute de vent, le moment correspondant soulève le navire 10 par l'arrière. Ceci a pour effet de diminuer automatiquement l'angle d'incidence du profil aérodynamique de la superstructure du navire et donc l'intensité de la portance aérodynamique générée. En conséquence, le navire revient dans sa position d'équilibre en basculant vers l'arrière. La position d'équilibre du navire 10 est par conséquent une position d'équilibre stable. Le navire 10 est ainsi stable en tangage. Dans un cas extrême, le soulèvement de l'arrière du navire 10 conduirait à ce que les hélices des moyens de propulsion sortent de l'eau, ce qui aurait pour effet d'annuler la force propulsive et donc de réduire la vitesse relative du navire. La portance aérodynamique diminuerait alors et le navire reviendrait, par basculement vers l'arrière autour de l'axe Y, dans sa position d'équilibre.

Ainsi, la géométrie du navire 10 permet de garantir sa sécurité d'utilisation.

La forme spatulée du corps avant des coques permet de conserver de bonnes performances malgré le déplacement vers l'avant du point H avec la vitesse du navire. En effet, elle permet de conserver une bonne stabilité en tangage à haute vitesse : bien que la surface du plan de flottaison se réduise rapidement avec la vitesse, l'inertie longitudinale du plan de flottaison diminue peu, la longueur du plan de flottaison restant importante, toujours supérieure à la distance entre le redan et le tableau arrière.

Dans l'exemple de réalisation décrit, chaque corps arrière est équipé d'une lame 80, visible par exemple sur les figures 2 et 3. Cela permet d'éviter qu'à haute vitesse, alors que le corps arrière sort de l'eau, l'air circulant dans le tunnel 18, délimité par l'intrados 16 de la superstructure, ne s'échappe latéralement entre la surface de l'eau et la ligne de quille 76 du corps arrière 54, 64 de chaque coque 50, 60,. Cette lame 80 est disposée sensiblement dans un plan parallèle au plan XZ et s'étend, selon l'axe X, à partir de la ligne de quille 76 du corps arrière à l'écart de celle-ci, et selon l'axe Z, du redan 53, 63 vers le tableau arrière 55, 65. Cette lame anti fuite d'air 80 permet de former une cloison entre la ligne de quille 76 du corps arrière et la surface de l'eau. En conséquence, l'effet de confinement de l'air dans le tunnel 18 est maintenu même pour des vitesses élevées.

De nombreuses variantes du catamaran présenté ci-dessus sont envisageables.

Ainsi, l'extrémité arrière du corps arrière peut comporter une portion arrière abaissée, c'est-à-dire faisant saillie vers les X négatifs par rapport à la ligne de quille du corps arrière, de manière à garantir que l'hélice reste au moins semi-immergée à toutes les vitesses.

En variante, les coques peuvent ne pas comporter de redan, les lignes de quille des corps avant et arrière étant alors en continuité l'une de l'autre dans un plan parallèle au plan XZ, tout en conservant un angle entre elles, au niveau de leur point de connexion.

En variante, chaque coque comporte une pluralité de redans transversaux, et des corps intermédiaires entre les corps avant et arrière.

Au lieu d'une architecture en catamaran, d'autres modes de réalisation du navire multicoque selon l'invention sont envisageables.

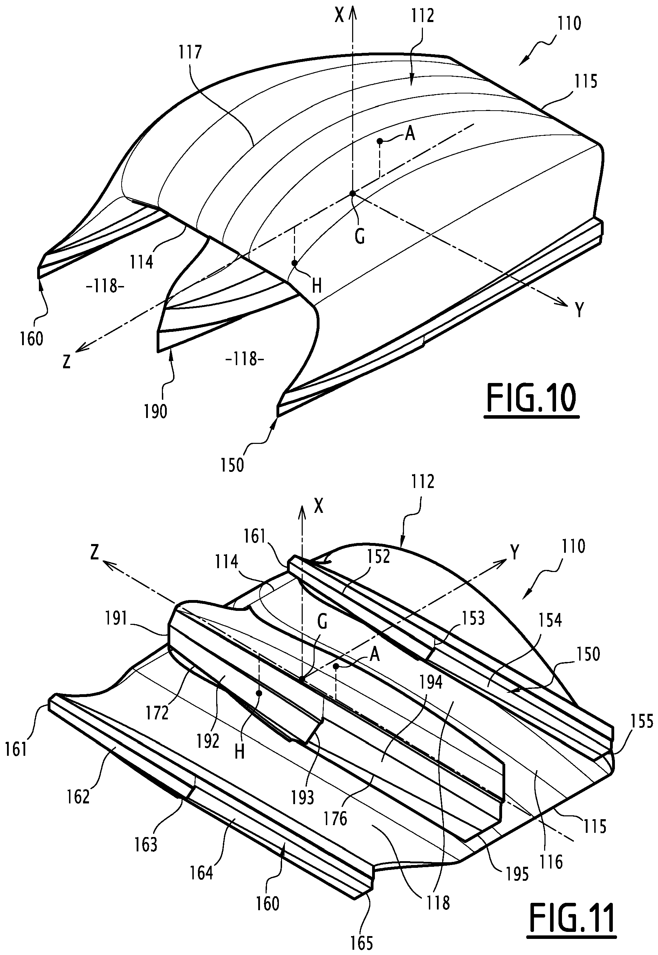

En particulier, comme représenté sur les figures 10 et 11, dans un mode de réalisation, le navire 110 est du type trimaran.

Sur ces figures, les éléments identiques à des éléments du catamaran des figures 1 à 9 sont repérés par les mêmes chiffres de référence augmentés d'une centaine.

Le trimaran 110 est symétrique par rapport au plan médian XZ.

Il comporte une superstructure 112 propre à générer une portance aérodynamique en un point A situé, en projection sur l'axe Z, en arrière du centre de gravité G.

Il comporte une coque centrale 190 et des coques latérales gauche 150 et droite 160. Chacune de ces coques est similaire à l'une des coques du catamaran décrit ci-dessus en détail. En particulier, chaque coque est conformée de manière à ce que la résultante des efforts hydrodynamiques H soit situé, en projection le long de l'axe Z, sous ou en avant du centre de gravité, et à ce que ce point H se déplace vers l'avant avec la vitesse.

La superstructure 112 présente une portion droite en forme d'aile, dont les extrémités sont continûment déformées vers le bas de manière à se raccorder d'une part à la coque latérale droite 150 et d'autre part à la coque centrale 190, et une portion gauche en forme d'aile, dont les extrémités sont continument déformées vers le bas de manière à se raccorder d'une part à la coque latérale gauche 160 et d'autre part à la coque centrale 190. L'intrados 114 de chaque portion en forme d'aile délimite avec la surface de l'eau un tunnel 118. Les deux tunnels 118 sont propres à générer un effet de tuyère augmentant la portance générée par la superstructure 112.

Comme les coques gauche 160 et droite 150, la coque centrale 190 est une coque planante à « step » qui comporte une étrave 191, un corps avant 192, un redan 193, un corps arrière 194 et un tableau arrière 195.

En projection dans un plan YZ, les lignes de quille 172 et 176 de chaque coque du trimaran 110 sont dans le prolongement l'une de l'autre. Dans le plan XZ, les lignes de quille 172 et 176 forme un angle entre 0 et 6°, not amment égal à 4°. Dans le plan XZ, la ligne de quille 176 est sensiblement rectiligne. La ligne de quille 172 est faiblement cambrée, de manière à ce que l'étrave 191 sorte de l'eau. Les lignes de quille 172 et 176 forment avec l'horizontale un angle d'incidence β, compris entre - 5 et 5°, en fonction de la vitesse du navire 110.

Pour le corps arrière 194, les faces s'étendant à partir de la ligne de quille confèrent au corps arrière une section transversale en « V », largement ouvert. Pour le corps avant 192, les faces s'étendant à partir de la ligne de quille confèrent au corps avant une section transversale en « V », ouvert au voisinage du redan et allant en se refermant vers l'étrave 191.

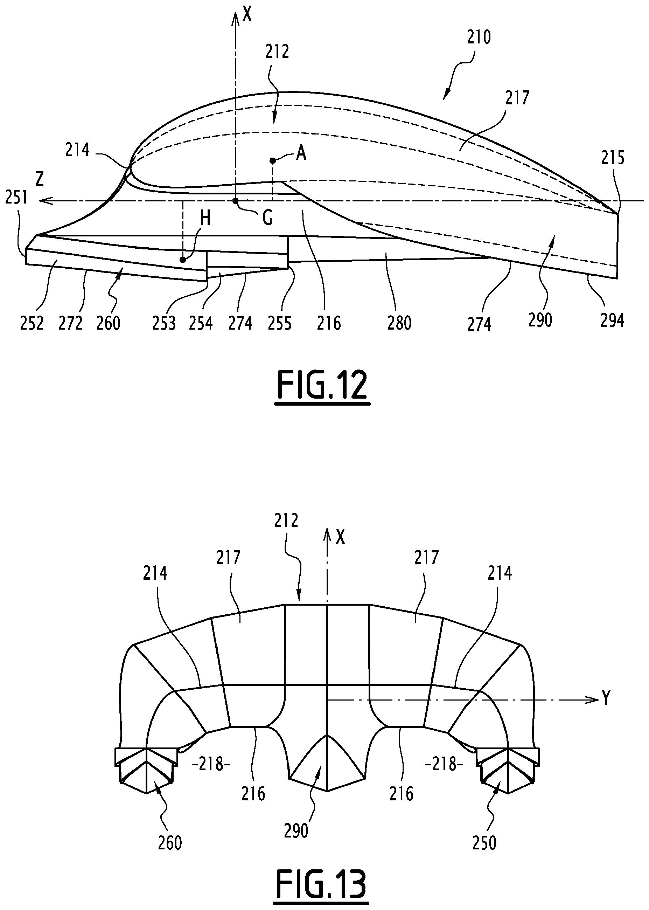

Un troisième mode de réalisation, dit tripode, qui constitue une variante du second mode de réalisation, trimaran, est représenté sur les figures 12 et 13. Sur ces figures, les éléments identiques à des éléments du trimaran des figures 10 et 11 sont repérés par les mêmes chiffres de référence, augmentés d'une centaine.

Dans le tripode 210, la coque centrale 290 se réduit essentiellement à un corps arrière 294, propre à définir un point d'appui hydrodynamique arrière pour le navire. Les coques latérales gauche 250 et droite 260 du tripode 210 comportent un corps avant et un corps arrière, mais le corps avant constitue la majeure partie de la longueur de la coque latérale, de sorte que celle-ci définit essentiellement un point d'appui hydrodynamique avant pour le navire, le corps arrière se limitant essentiellement à une lame anti-fuite.

Si la géométrie des coques latérales est similaire à celle des coques des autres modes de réalisation, dans le tripode 210, la ligne de quille 274 de la coque centrale 290 présente un angle d'incidence important par rapport à l'horizontale. Ainsi, le point d'appui définit par cette coque centrale est très reculé selon l'axe Z à l'arrêt et se déplace vers l'arrière avec l'augmentation de la vitesse du navire avant de disparaitre lorsque la portance aérodynamique est suffisante pour faire sortir la coque centrale de l'eau.

Dans une autre variante de réalisation du trimaran, les coques latérales droite et gauche n'apportent pas de contribution hydrodynamique significative, en dehors d'une aide à la stabilité à l'arrêt. A hautes vitesses, elles constituent essentiellement une lame anti-fuite sur toute la longueur. Ces coques latérales participent en revanche à la portance aérodynamique totale en venant effleurer la surface de l'eau de manière à former avec l'intrados des superstructures droite et gauche un tunnel propre à générer un effet de tuyère.

## Revendications

1. Navire (10 ; 110 ; 210) multicoque à propulsion marine à sustentation aérodynamique partielle passive, destiné au transport de personnes et/ou de matériel, présentant un rapport d'une longueur du navire sur une largeur du navire inférieur à deux, et auquel est associé un repère orthogonal XYZ, dont un axe longitudinal Z, orienté de l'arrière vers l'avant du navire, correspond à un axe de roulis du navire, un axe transversal Y correspond à un axe de tangage du navire et un axe X correspond à un axe de lacet du navire, le navire comportant une superstructure et deux coques, la superstructure du navire formant une aile propre à générer de manière passive une portance aérodynamique comprise entre 20 et 90 % du poids total du navire à une vitesse de croisière du navire, ladite aile comportant des extrémités recourbées et connectées à chacune des coques et ayant une surface développée d'un extrados de l'aile sensiblement égale au produit de la longueur du navire par la largeur du navire, **caractérisé en ce que**:
- chaque coque (50, 60 ; 150, 160, 190 ; 250, 260, 290) est du type coque planante, les coques définissant ensemble au moins un appui hydrodynamique (H2) en arrière du centre de gravité (G) et au moins un appui hydrodynamique (H1) en avant du centre de gravité (G), et
- un point A, d'application de la portance aérodynamique générée par la superstructure (12 ; 112 ; 212), est situé en arrière d'un centre de gravité G, d'application des forces de gravité sur le navire, un point H, d'application de la résultante des efforts hydrodynamiques générés par les coques (50, 60 ; 150, 160, 190 ; 250, 260, 290), étant situé en avant du centre de gravité G.

2. Navire selon la revendication 1, dans lequel chaque coque (50, 60) comporte longitudinalement, de l'arrière vers l'avant, au moins un corps arrière (54, 64) présentant une ligne de quille arrière (76) et un corps avant (52, 62) présentant une ligne de quille avant (72), les lignes de quille formant entre elles un angle (α) entre 0 et 6 °, notamment 4 °, et formant avec l'horizontale un angle d'incidence (β), entre - 5 et 5° en assiette hydrostatique.

3. Navire selon la revendication 2, dans lequel chaque coque (50, 60) comporte au moins un redan (53, 63) entre les corps arrière et avant.

4. Navire selon la revendication 3, dans lequel le corps avant (52, 62) possède une section transversale en forme de « V », dont le demi-angle d'ouverture (γ) évolue continument d'un angle sensiblement nul à l'avant, pour former une étrave (51, 61) de la coque, vers un demi-angle d'ouverture au niveau du redan, le corps avant ayant un coefficient prismatique mesuré en assiette hydrostatique inférieur à 0,7.

5. Navire selon la revendication 3, dans lequel le corps arrière (54, 64) comporte, sous sa ligne de quille (74) une lame anti fuite d'air (80).

6. Navire selon l'une quelconque des revendications 1 à 5, dans lequel un bord d'attaque (14) d'une portion centrale (20) de la superstructure (12) est, selon l'axe longitudinal Z, en arrière d'une étrave (51, 61) du ou de chaque coque (50, 60).

7. Navire selon la revendication 6, dans lequel un bord d'attaque (14) d'une portion d'extrémité (30, 40) de la superstructure (12) connecte un bord d'attaque d'une portion centrale (20) de la superstructure (12) à une étrave d'une coque en suivant un profil aérodynamique progressif et courbe.

8. Navire selon l'une quelconque des revendications 1 à 7, dans lequel un bord de fuite (15) d'une portion centrale (20) de la superstructure (12) est, selon l'axe longitudinal Z, en arrière d'un tableau arrière (55, 65) de chaque coque (50, 60).

9. Navire selon l'une quelconque des revendications 1 à 8, comportant deux coques (50, 60) disposées symétriquement par rapport à un plan médian XZ, le navire (10) étant un catamaran.

10. Navire selon l'une quelconque des revendications 1 à 8, comportant une coque centrale (190 ; 290) et deux coques latérales (150, 160 ; 250, 260).

11. Navire selon la revendication 10, dans lequel la coque centrale (290) définit un appui hydrodynamique arrière et les coques latérales (250, 260), des appuis hydrodynamiques avant.

12. Navire (10 ; 110) selon l'une quelconque des revendications 1 à 11, **caractérisé en ce qu'**il présente une longueur entre 10 et 50 mètres, de préférence entre 18 et 30 mètre notamment 21 mètres.

## Patentansprüche

1. Mehrrumpfschiff (10; 110; 210) mit einem Schiffsantrieb und mit einem teilweisen passiven aerodynamischen Auftrieb, das zum Transport von Personen und/oder Material eingerichtet ist, das ein Verhältnis einer Länge des Schiffes zu einer Breite des Schiffes von weniger als zwei aufweist und dem ein rechtwinkliges Koordinatensystem XYZ zugeordnet ist, bei dem eine von der Rückseite zu der Vorderseite des Schiffes ausgerichtete Längsachse Z einer Rollachse des Schiffes entspricht, eine Querachse Y einer Nickachse des Schiffes und eine Achse X einer Gierachse des Schiffes entspricht, wobei das Schiff über einen Überbau und zwei Rümpfe verfügt, wobei der Überbau des Schiffes einen Flügel bildet, der dazu eingerichtet ist, bei einer Reisegeschwindigkeit des Schiffes auf passive Art und Weise einen aerodynamischen Auftrieb zwischen 20 und 90% des Gesamtgewichts des Schiffes zu erzeugen, wobei der Flügel zwei gekrümmte Enden aufweist und mit jeweils einem Rumpf verbunden ist sowie eine als Wölbfläche des Flügels ausgebildete Oberfläche aufweist, die relativ genau dem Produkt der Länge des Schiffes und der Breite des Schiffes entspricht, **dadurch gekennzeichnet, dass**
- jeder Rumpf (50, 60; 150, 160, 190; 250, 260, 290) vom Typ eines Gleitrumpfes ist, wobei die Rümpfe gemeinsam wenigstens eine hydrodynamische Auflage (H2) hinter dem Schwerpunkt G und wenigstens eine hydrodynamische Auflage (H1) vor dem Schwerpunkt G bilden, und
- ein Punkt A des Ansatzes des durch den Überbau (12; 112; 212) erzeugten Auftriebs hinter einem Schwerpunkt G des Ansatzes der Schwerkräfte des Schiffs liegt und ein Punkt H als Ansatz der resultierenden der durch die Rümpfe (50, 60; 150, 160, 190; 250, 260, 290) erzeugten hydrodynamischen Wirkungen vor dem Schwerpunkt G liegt.

2. Schiff nach Anspruch 1, bei dem jeder Rumpf (50, 60) in Längsrichtung von hinten nach vorne wenigstens einen rückseitigen Körper (54, 64) mit einer rückseitigen Kiellinie (176) und einen vorderseitigen Körper (52, 62) mit einer vorderseitigen Kiellinie (72) aufweist, wobei die Kiellinien zwischen sich einen Winkel (α) zwischen 0 und 6°, insbesondere 4° und mit der Horizontalen einen Neigungswinkel (β) zwischen -5 und 5° in hydrostatischer Ruhelage bilden.

3. Schiff nach Anspruch 2, bei dem jeder Rumpf (50, 60) zwischen den rückseitigen und vorderseitigen Körpern wenigstens eine Unterschneidung (53, 63) aufweist.

4. Schiff nach Anspruch 3, bei dem der vorderseitige Körper (52, 62) einen Querschnitt in Gestalt eines "V" besitzt, dessen halber Öffnungswinkel (γ) sich kontinuierlich von einem Anfangswinkel von im Wesentlichen 0 um einen Vordersteven (51, 61) des Rumpfes zu bilden, nach vorne zu einem halben Öffnungswinkel im Bereich der Unterschneidung entwickelt, wobei der Körper einen in hydrostatischer Ruhelage gemessenen prismatischen Koeffizienten von weniger als 0,7 aufweist.

5. Schiff nach Anspruch 3, bei dem der rückseitige Körper (54, 64) unter der Kiellinie (64) eine Kufe (80) gegen Entweichen von Luft aufweist.

6. Schiff nach einem der Ansprüche 1 bis 5, bei dem eine Anströmkante (14) eines mittigen Bereichs (20) des Überbaus (12) entlang der Längsachse Z hinter einem Vordersteven (51, 61) des oder jedes Rumpfes (50, 60) liegt.

7. Schiff nach Anspruch 6, bei dem eine Anströmkante (14) eines randseitigen Bereichs (30, 40) des Überbaus (12) eine Anströmkante eines mittigen Bereichs (20) des Überbaus (12) mit einem Vordersteven eines Rumpfes entlang eines aerodynamisch zunehmenden und gekrümmten Profils verbindet.

8. Schiff nach einem der Ansprüche 1 bis 7, bei dem eine Abströmkante (15) eines mittigen Bereichs (20) des Überbaus (12) entlang der Längsachse Z hinter einem Heckspiegel (55, 65) jedes Rumpfes (50, 60) liegt.

9. Schiff nach einem der Ansprüche 1 bis 8, das über zwei Rümpfe (50, 60) verfügt, die symmetrisch in Bezug auf eine Mittelebene XZ angeordnet sind, wobei das Schiff (10) ein Katamaran ist.

10. Schiff nach einem der Ansprüche 1 bis 8, das über einen mittigen Rumpf (190, 290) und über zwei seitliche Rümpfe (150, 160, 250, 260) verfügt.

11. Schiff nach Anspruch 10, bei dem der mittige Rumpf (290) ein hinteres hydrodynamisches Auflager und die seitlichen Rümpfe (250, 260) vorderseitige hydrodynamische Auflager bilden.

12. Schiff (10; 110) nach einem der Ansprüche 1 bis 11, **dadurch gekennzeichnet, dass** es eine Länge zwischen 10 und 50 Metern, vorzugsweise zwischen 18 und 30 Metern und insbesondere von 21 Metern, aufweist.

## Claims

1. A passive partial aerodynamic lift marine propulsion multihull ship (10; 110; 210), intended to transport people and/or goods, having a ratio of a length of the ship to a width of the ship smaller than two, and with which an orthogonal frame of reference XYZ is associated, whereof a longitudinal axis Z, oriented from the back to the front of the ship, corresponds to a roll axis of the ship, a transverse axis Y corresponds to a pitch axis of the ship and an axis X corresponds to a yaw axis of the ship, the ship including a superstructure and two hulls, the superstructure of the ship forming a wing able to passively generate an aerodynamic lift comprised between 20 and 90% of the total weight of the ship at a cruising speed of the ship, said wing including curved ends connected to each of the hulls and having a developed surface of an extrados of the wing substantially equal to the product of the length of the ship multiplied by the width of the ship,
**characterized in that**:
- each hull (50, 60 ; 150, 160, 190 ; 250, 260, 290) is of the planing hull type, the hulls defining together at least one hydrodynamic center of lift (H2) behind the center of gravity (G) and at least one hydrodynamic center of lift (H1) in front of the center of gravity (G), and
- a point A, of application of the aerodynamic lift generated by the superstructure (12 ; 112 ; 212), is located behind a center of gravity G, of application of the gravitational forces on the ship, a point H, of application of the resultant of the hydrodynamic forces generated by the hulls (50, 60 ; 150, 160, 190 ; 250, 260, 290) being located in front of the center of gravity G.

2. Ship according to claim 1, wherein each hull (50, 60) includes longitudinally, from back to front, at least one rear body (54, 64) having a rear keel line (76) and a front body (52, 62) having a front keel line (72), the keel lines forming an angle (α) between them between 0 and 6°, in particular 4°, and forming an angle of attack (β) with the horizontal between - 5 and 5° in hydrostatic trim.

3. Ship according to claim 2, wherein each hull (50, 60) includes at least one step (53, 63) between the rear and front bodies.

4. Ship according to claim 3, wherein the front body (52, 62) has a V-shaped cross-section, the half aperture angle (γ) of which evolves continuously from a substantially zero angle at the front, to form a bow (51, 61) of the hull, toward a half aperture angle at the step, the front body having a prismatic coefficient measured in hydrostatic trim of less than 0,7.

5. Ship according to claim 3, wherein the rear body (54, 64) includes, below its keel line (74), an anti-air leak blade (80).

6. Ship according to any one of claims 1 to 5, wherein a leading edge (14) of a central portion (20) of the superstructure (12) is, along the longitudinal axis Z, behind a bow (51, 61) of the or each hull (50, 60).

7. Ship according to claim 6, wherein a leading edge (14) of an end portion (30, 40) of the superstructure (12) connects a leading edge of a central portion (20) of the superstructure (12) to a bow of a hull, following a gradual and curved aerodynamic profile.

8. Ship according to any one of claims 1 to 7, wherein a trailing edge (15) of a central portion (20) of the superstructure (12) is, along the longitudinal axis Z, behind a transom (55, 65) of each hull (50, 60).

9. Ship according to any one of claims 1 to 8, including two hulls (50, 60) arranged symmetrically relative to a median plane XZ, the ship (10) being a catamaran.

10. Ship according to any one of claims 1 to 8, including a central hull (190 ; 290) and two side hulls (150, 160 ; 250, 260).

11. Ship according to claim 10, wherein the central hull (290) defines a rear hydrodynamic center of lift and the side hulls (250, 260) define front hydrodynamic centers of lift.

12. Ship (10 ; 110) according to any one of claims 1 to 11, **characterized in that** it has a length between 10 and 50 meters, preferably between 18 and 30 meters, in particular 21 meters.
